# FASCICULE DE BREVET EUROPEEN

(11) **EP 2 060 441 B1**
(45) Date de publication et mention de la délivrance du brevet: **23.02.2011**
(21) Numéro de dépôt: 08168557.0
(22) Date de dépôt: 07.11.2008
(51) Int. Cl.: B60Q 1/14

(54) **Procédé d'adaptation automatique au trafic routier d'un faisceau lumineux de dispositif projecteur**
Verfahren zur automatischen Anpassung des Lichtstrahls eines Fahrzeugscheinwerfers an den Straßenverkehr
Method for automatically adjusting the light beam of a headlight device to road traffic

(30) Priorité: 13.11.2007 FR 0707977
(43) Date de publication de la demande: 20.05.2009
(73) Titulaire: Valeo Vision, 93012 Bobigny Cedex (FR)
(72) Inventeur: Reiss, Benoît, 95600 Eaubonne (FR); Grimm, Martin, 93340 Le Raincy (FR)

(56) Documents cités:
- EP-A- 1 707 438
- EP-A- 1 769 968
- EP-A- 1 826 476
- DE-A1-102006 043 281
- GB-A- 1 000 265
- US-A- 3 341 700

## Description

La présente invention a pour objet un procédé d'adaptation automatique d'un faisceau lumineux, émis par un dispositif projecteur, notamment de véhicule automobile, en fonction du trafic routier rencontré par le véhicule considéré. Un but essentiel de l'invention est d'optimiser automatiquement, en fonction du trafic observé sur une route, l'éclairage généré par un véhicule empruntant ladite route, notamment en proposant un faisceau lumineux éclairant une importante portion de la route, sur une distance importante, sans pour autant éblouir les véhicules croisés ou suivis.

Le domaine de l'invention est, d'une façon générale, celui des projecteurs de véhicule automobile. Dans ce domaine, on connaît différents types de dispositifs projecteurs classiques, parmi lesquels on trouve essentiellement :
- des feux de position, d'intensité et de portée faible ;
- des feux de croisement, ou codes, d'intensité plus forte et de portée sur la route avoisinant 80 mètres, qui sont utilisés essentiellement la nuit et dont la répartition du faisceau lumineux est telle qu'elle permet de ne pas éblouir le conducteur d'un véhicule croisé ; les faisceaux lumineux de type code sont différents avec le type de circulation, à gauche ou à droite, dans laquelle ils sont utilisés ;
- des feux de route longue portée, dont la zone de vision sur la route avoisine 600 mètres, et qui doivent être éteints lorsque l'on croise un autre véhicule afin de ne pas éblouir son conducteur ;
- des feux anti-brouillard...

Par ailleurs, on connaît un type, de projecteurs perfectionnés, appelés projecteurs bifonctions, qui cumulent les fonctions de feux de croisement et de feux longue portée : à cet effet, on peut par exemple disposer à l'intérieur du projecteur bifonctions un cache amovible, constitué par exemple d'une plaque métallique, pouvant passer sur commande d'une première position dans laquelle il n'occulte pas le signal lumineux produit par la source lumineuse du projecteur, la portée du projecteur correspondant alors à celle des feux de route, à une deuxième position dans laquelle il occulte une partie du signal lumineux produit par la source lumineuse du projecteur, la portée du projecteur étant alors limitée à celle des feux de croisement. Le projecteur doit, dans la deuxième position, engendrer un faisceau lumineux à coupure réglementaire correspondant à un faisceau de type code classique, la forme de la coupure étant donnée par la forme du cache interceptant une partie du signal lumineux. Cet exemple de réalisation est principalement mis en oeuvre dans les dispositifs projecteurs de type elliptiques.

Cependant les dispositifs projecteurs classiques qui viennent d'être évoqués, plus particulièrement ceux qui sont utilisés comme feux de croisement, produisent des faisceaux lumineux qui sont perfectibles lorsque ces dispositifs projecteurs sont utilisés dans certaines conditions afin d'améliorer le confort de conduite. Ainsi, par exemple, lorsqu'un véhicule est sur une autoroute, il est judicieux de relever la ligne de coupure par rapport à celle d'un faisceau de type code classique, et de concentrer le flux lumineux du feu de croisement au niveau de l'axe optique du dispositif projecteur ; on fait ainsi porter efficacement un peu plus loin le faisceau lumineux produit. A l'opposé, lorsqu'un véhicule circule en ville, il n'est pas nécessaire de faire porter le faisceau lumineux aussi loin que sur des routes dégagées. Par ailleurs, lorsqu'un véhicule aborde un virage, différentes zones de la portion de route empruntée par le véhicule ne sont plus éclairées de manière satisfaisante.

Aussi, en complément des fonctions projecteurs principales classiques, notamment codes et routes, différents perfectionnements sont progressivement apparus. On a ainsi vu se développer des fonctions élaborées, ou fonctions avancées, connues sous le nom de fonctions AFS (pour Advanced Front light System en langue anglaise) qui modifient légèrement le positionnement de la coupure du faisceau lumineux produit, et éventuellement sa répartition en terme d'intensité lumineuse, parmi lesquelles on trouve notamment :
- une fonction dite code virage, ou fonction DBL (pour Dynamic Bending Light en langue anglaise), qui permet de modifier l'orientation d'un faisceau lumineux produit par un module optique ; cette fonction est initialement destinée à éclairer la route de façon optimale lorsque le véhicule aborde un virage ; par module optique, on désigne ici un système optique comprenant au moins une source lumineuse, éventuellement disposée dans un réflecteur, et éventuellement associée à un ou plusieurs éléments dioptriques du type lentille ;
- une fonction dite Motorway Light en anglais, pour faisceau d'autoroute, ou faisceau code autoroute. Cette fonction assure une augmentation de la portée d'un feu de croisement, l'amenant jusqu'à environ 150 mètres, notamment en augmentant l'intensité lumineuse du faisceau qu'elle génère en plusieurs points de l'espace, et en présentant une ligne de coupure relevée par rapport à celle d'un code classique. En outre, la valeur d'éclairement maximum autorisé passe, en Europe, de environ 70 Lux à environ 120 Lux.

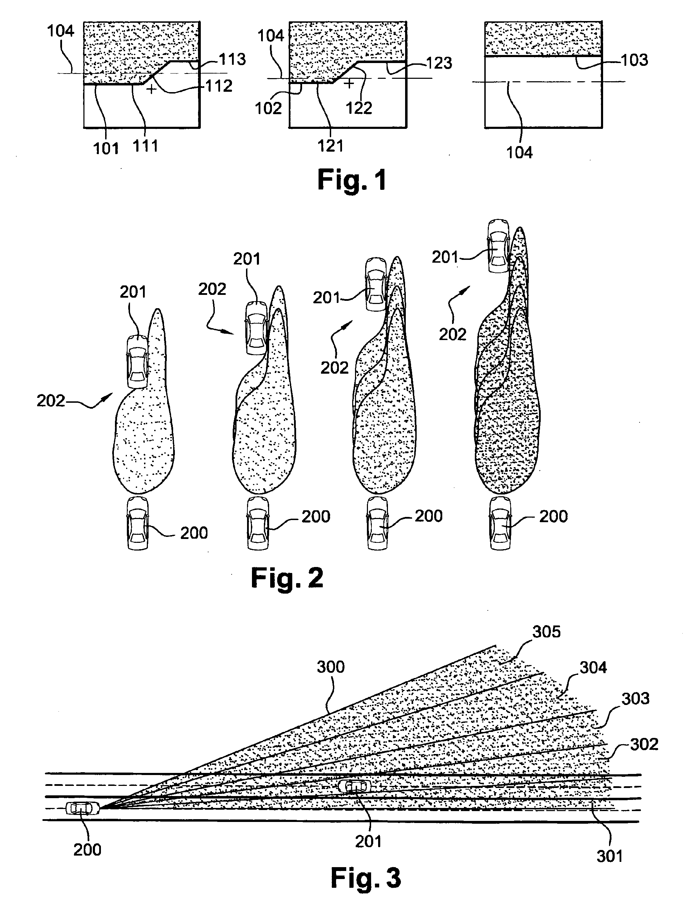

A la figure 1, on a représenté, à titre d'exemple et de façon schématique, différentes projections sur une surface plane de différents faisceaux lumineux qui viennent d'être mentionnés. Les faisceaux lumineux représentés correspondent à ceux existant dans les pays où la conduite s'effectue à droite de la route. On obtient les faisceaux lumineux correspondant à une conduite à gauche par simple symétrie selon un axe central vertical. La surface plane de projection est disposée face au dispositif projecteur considéré, perpendiculairement à son axe optique. La partie disposée au-dessus des lignes de coupure apparaissant dans ces projections présente une absence de lumière dans la zone correspondante de l'espace, la partie disposée en-dessous de ces lignes de coupure correspondant à une zone de l'espace éclairée de façon réglementaire au moyen du dispositif projecteur considéré.

On a ainsi représenté une première ligne de coupure 101, correspondant à un faisceau code associé à une circulation à droite de la chaussée, une deuxième ligne de coupure 102, correspondant à un faisceau d'autoroute, toujours associé à une circulation à droite de la chaussée, et une troisième ligne de coupure 103, correspondant à un faisceau route. La ligne d'horizon 104 est représentée en pointillés. La ligne de coupure du faisceau de type code, respectivement du faisceau de type autoroute, est constitué :
- d'une première partie référencée 111, respectivement référencée 121, qui prend la forme d'un premier segment plat horizontal disposé sous la ligne d'horizon 104 ; dans le cas du faisceau de type code, l'angle de projection observé entre la ligne d'horizon et le premier segment est de - 0,57 degrés, alors que dans le cas du faisceau de type autoroute, l'angle de projection observé entre la ligne d'horizon et le premier segment est de - 0,34 degrés ;
- d'une deuxième partie référencée 112, respectivement référencée 122, qui prend la forme d'un segment oblique, incliné d'environ 15 degrés par rapport à l'horizontale, traversant la ligne d'horizon 104;
- d'une troisième partie 113, respectivement référencée 123, qui prend la forme d'un deuxième segment plat horizontal disposé légèrement au-dessus de la ligne d'horizon 104.

De telles lignes de coupures appartiennent à la catégorie des lignes de coupure obliques associées, dans ces exemples, à la circulation à droite.

De telles lignes de coupure permettent de ne pas éblouir les conducteurs croisés ou suivis, en maintenant, par exemple dans le cas d'une circulation à droite de la chaussée, la ligne de coupure sous la ligne d'horizon sur la partie gauche de la route, tout en offrant une zone de l'espace éclairée plus importante sur la partie droite de la route. A l'inverse, la ligne de coupure 103 du faisceau de type route, située nettement au-dessus de la ligne d'horizon, entraîne l'éblouissement du conducteur suivi ou croisé. Ce type de fonction n'est donc utilisé que dans des conditions particulières, notamment en l'absence de véhicules suivis ou croisés.

Le faisceau de type autoroute correspond donc à un faisceau lumineux dont la forme globale est comparable à la forme d'un faisceau de type code dont on a relevé la ligne de coupure, mais aussi dont on a augmenté l'intensité lumineuse. La fonction autoroute peut être réalisée aux moyens de différents types de dispositifs projecteurs. Un premier exemple de réalisation est caractérisé notamment par la présence d'une plieuse sur le cache précédemment mentionné, cache intervenant dans les dispositifs projecteurs bifonctions. Une plieuse correspond à une partie du cache qui prend une position horizontale, orientée vers la source lumineuse du dispositif projecteur considéré, lorsque le cache est positionné de façon à intercepter une partie des rayons lumineux produits par ladite source lumineuse. La plieuse permet alors de réfléchir une partie des rayons lumineux qui auraient été interceptés par le cache en l'absence de la plieuse, permettant ainsi d'augmenter l'intensité lumineuse émise, et de relever le faisceau lumineux produit par rapport au faisceau lumineux produit par un code classique.

EP 1 769 968 A2 décrit un dispositif d'éclairage connu utilisant un premier faisceau ayant une coupure oblique pour la circulation à gauche et un deuxième faisceau ayant une coupure oblique pour la circulation à droite. La distribution lumineuse obtenue favorise l'éclairage des trottoirs mais crée une "zone noire" au niveau de laquelle la portée des phares est réduite, ce qui est décrit comme un inconvénient.

D'autres exemples de dispositifs projecteurs permettant de produire un faisceau de type autoroute existent dans l'état de la technique, par exemple les dispositifs projecteurs multifonctions qui comprennent une source lumineuse et un cache mobile occultant sélectivement une partie du flux lumineux émis par la source, permettant ainsi de réaliser les fonctions codes, routes et autoroutes. De tels dispositifs projecteurs sont par exemple connus sous l'appellation de dispositif trixénon.

Dans le but général d'améliorer le confort de conduite en terme de visibilité, il existe, dans l'état de la technique, des modules optiques bifonctions dont la commutation de la fonction code à la fonction route, et vice-versa, est automatique, ladite commutation dépendant des conditions de circulation. Avec des véhicules équipés de tels modules bifonctions, on procède à la recherche de la présence d'un véhicule susceptible d'être ébloui par une utilisation de la fonction route. Si aucun véhicule n'est détecté, la fonction route est automatiquement activée. Dès que la présence d'un véhicule est détectée, la fonction route est automatiquement désactivée, et le véhicule équipé du projecteur bifonctions présente de nouveau un faisceau lumineux de type code.

Dans la pratique, on fixe à 600 mètres la valeur seuil à partir de laquelle l'absence de véhicule détecté autorise la commutation vers la fonction route. Dès qu'un véhicule est détecté à moins de 600 mètres du véhicule équipé, c'est la fonction code qui est activée. Or cette fonction n'assure un éclairage satisfaisant que sur une distance avoisinant 80 mètres, qui plus est essentiellement sur la droite de la route dans le cas d'une circulation à droite, le côté gauche de la chaussée étant nettement moins éclairé. Il existe donc de nombreuses configurations de circulation, celles dans lesquelles le premier véhicule susceptible d'être ébloui est situé à plus d'une centaine de mètres et à moins de 600 mètres du véhicule équipé, pour lesquelles l'éclairage de la route pourrait être optimisé sans pour autant éblouir le conducteur d'un quelconque autre véhicule.

On a donc proposé, différentes solutions permettant d'adapter la portée du faisceau en fonction d'une distance estimée à laquelle se situe le véhicule croisé ou suivi. Le résultat d'une telle adaptation est représenté schématiquement à la figure 2, sur laquelle on a représenté un véhicule 200 qui adapte la portée du faisceau lumineux qu'il produit en fonction de l'éloignement d'un véhicule suivi 201. Si ces solutions sont satisfaisantes en terme d'optimisation de la portée du faisceau lumineux, elles ne le sont pas si on considère l'éclairage latéral de la route qui est proposé : comme on le voit sur la figure 2, une partie 202 de la route située à gauche du véhicule suivi 201 n'est pas éclairée, alors que la partie correspondante à droite du véhicule est éclairée.

Ainsi, en considérant la figure 3, il est apparu intéressant de découper un faisceau lumineux global 300 émis par le véhicule 200 en différentes portions adjacentes, référencées 301 à 305, chaque portion correspondant à un secteur angulaire du faisceau global 300. Ainsi, si le véhicule croisé ou suivi 201 est présent dans la portion 302, un faisceau lumineux global optimisé consisterait à rendre non éblouissante uniquement la portion 302 du faisceau lumineux global 300. Par portion non éblouissante, on désigne un secteur angulaire du faisceau lumineux global dans lequel le faisceau est concentré uniquement sous la ligne d'horizon, lorsqu'il atteint, ou avant d'atteindre, le véhicule suivi ou croisé.

Dans l'état de la technique, on a proposé, pour atteindre un tel objectif, de réaliser un dispositif projecteur faisant intervenir une pluralité de diodes électroluminescentes (leds), disposées de telle sorte que chaque led, ou groupe de leds, est plus particulièrement utilisé pour la production du faisceau lumineux dans une des portions du faisceau lumineux global ; pour créer une portion non éblouissante, il suffit alors d'intervenir sur les leds associées à la portion considérée, par exemple en les éteignant.

Mais une telle solution présente un certain nombre d'inconvénients : d'une part, elle est coûteuse, du fait du nombre de leds utilisées. Ensuite, pour les mêmes raisons, elle est encombrante et lourde. Enfin, elle crée un phénomène de scintillement lorsque le véhicule passe d'une portion à l'autre ; ce phénomène de scintillement est encore plus présent lorsque plusieurs véhicules croisés ou suivis sont détectés dans des portions différentes du faisceau lumineux global.

C'est un objet de l'invention de répondre au problème qui vient d'être mentionné. Dans l'invention, on propose d'éclairer de façon optimale une route empruntée par un véhicule considéré mettant en oeuvre le procédé selon l'invention, tout en assurant le non éblouissement des autres véhicules. A cet effet, on propose, dans l'invention, de détecter la présence d'au moins un véhicule croisé ou suivi, de déterminer son positionnement latéral sur la route, puis de générer un faisceau lumineux global qui ne crée pas d'éblouissement pour le véhicule adverse considéré en proposant une superposition d'au moins un premier et un deuxième faisceaux lumineux présentant respectivement une coupure oblique,associée à une circulation à droite et une coupure oblique associée à une circulation à gauche. Avantageusement, une orientation appropriée du faisceau lumineux global est obtenue par l'utilisation de fonctions DBL. Avantageusement, la distance à laquelle est situé le véhicule adverse est prise en considération pour adapter la portée du faisceau lumineux global.

L'invention concerne donc essentiellement un procédé d'adaptation automatique d'un faisceau lumineux global produit par un couple de dispositifs projecteurs d'un premier véhicule automobile circulant sur une route, ledit couple étant composé d'un dispositif projecteur gauche et d'un dispositif projecteur droit, ledit couple de dispositifs projecteurs étant apte à réaliser au moins :
- une fonction code en produisant un faisceau lumineux de type code ;
- une fonction route en produisant un faisceau lumineux de type route ;
le procédé comportant en outre les différentes étapes consistant à :
- détecter la présence d'au moins un deuxième véhicule, suivi ou croisé, à ne pas éblouir ;
- le cas échéant, c'est-à-dire si la présence d'au moins un deuxième véhicule a été détectée, déterminer une position latérale instantanée du deuxième véhicule sur la route ;
- superposer un premier faisceau lumineux (401), produit par un des dispositifs projecteurs du couple de dispositifs projecteurs et présentant une coupure oblique associée à une circulation à droite, et un deuxième faisceau lumineux (402), produit par l'autre dispositif projecteur du couple de dispositifs projecteurs et présentant une coupure oblique associée à une circulation à gauche, pour former le faisceau lumineux global (400) ;
- orienter le premier faisceau lumineux et/ou le deuxième faisceau lumineux en fonction de la position latérale instantanée déterminée du deuxième véhicule de manière à émettre une portion non éblouissante du faisceau lumineux global dans une direction visant la position latérale du deuxième véhicule

Notamment, le faisceau lumineux présentant une coupure oblique associée à une circulation à droite, respectivement à gauche, peut être réalisé par exemple par une fonction de type code associé à la circulation à droite, respectivement à gauche, ou par une fonction de type autoroute associé à la circulation à droite, respectivement à gauche.

Le procédé selon l'invention peut également présenter, outre les caractéristiques principales énoncées dans le paragraphe précédent, une ou plusieurs des caractéristiques complémentaires suivantes ; toute combinaison de ces caractéristiques complémentaires, dans la mesure où elles ne s'excluent pas mutuellement, constitue un exemple avantageux de réalisation de l'invention:
- le procédé comporte l'étape d'orienter le faisceau lumineux global en fonction de la position latérale instantanée déterminée du deuxième véhicule en émettant une portion non éblouissante du faisceau lumineux global dans une direction visant la position latérale du deuxième véhicule. Cette étape étant éventuellement substituée à l'étape d'orientation du premier faisceau lumineux et/ou du deuxième faisceau lumineux ;
- l'étape de détection est effectuée lorsque la fonction route desdits projecteurs est activée.
- le procédé comporte les différentes étapes supplémentaires consistant à :
   - détecter la présence d'une pluralité de véhicules supplémentaires, et notamment d'un troisième véhicule, le deuxième véhicule et le troisième véhicule présentant un écartement maximal parmi des écartements existant entre les différents véhicules de la pluralité de véhicules ;
   - orienter le premier faisceau lumineux et/ou le deuxième faisceau lumineux en fonction de la position latérale instantanée déterminée du deuxième véhicule et du troisième véhicule de manière à émettre une portion non éblouissante du faisceau lumineux global dont la taille correspond au moins au dit écartement maximal dans une direction permettant le positionnement de ladite portion non éblouissante sur une zone correspondant à l'écartement maximal présenté par le deuxième véhicule et le troisième véhicule ;
- le dispositif projecteur droit et le dispositif projecteur gauche mis en oeuvre dans le procédé selon la présente invention, comportent un mécanisme d'actionnement dans les virages des faisceaux lumineux permettant la réalisation d'une fonction code virage, encore appelée fonction DBL, l'étape consistant à orienter ledit premier faisceau lumineux et/ou ledit deuxième faisceau lumineux en fonction de la position latérale déterminée pour le deuxième véhicule est réalisée par l'utilisation du même mécanisme d'actionnement dans les virages dans à au moins un des dispositifs projecteurs considérés ;
- le faisceau lumineux présentant une coupure oblique associée à une circulation à droite et le faisceau lumineux présentant une coupure oblique associée à une circulation à gauche sont produits respectivement par un premier module optique et par un deuxième module optique, appartenant respectivement au dispositif projecteur droit et au dispositif projecteur gauche, le premier module optique et le deuxième module optique comportant chacun une unique source lumineuse, notamment de type lampe à Xénon ;
- le faisceau lumineux présentant une coupure oblique associée à une circulation à gauche est produit par le dispositif projecteur gauche et en ce que le faisceau lumineux présentant une coupure oblique associée à une circulation à droite est produit par le dispositif projecteur droit.
- le procédé comporte les différentes étapes supplémentaires consistant à, suite à la détection de la présence d'au moins un deuxième véhicule, suivi ou croisé, à ne pas éblouir :
   - déterminer une distance instantanée entre le premier véhicule et le deuxième véhicule ;
   - adopter une portée du faisceau lumineux global optimisée, c'est-à-dire approchant au maximum, en tenant compte des moyens disponibles au sein des dispositifs projecteurs considérés, en fonction de la distance déterminée ;
- l'étape consistant à optimiser la portée du faisceau lumineux global comporte l'opération consistant à régler la hauteur d'une ligne de coupure du faisceau lumineux global au moyen d'un système de correction d'assiette ;
- l'étape consistant à optimiser la portée du faisceau lumineux global

comporte l'opération consistant à régler la hauteur d'une ligne de coupure du faisceau lumineux global au moyen d'un cache évoluant selon un mouvement sensiblement vertical dans au moins un des dispositifs projecteurs du couple de dispositifs projecteurs ;
- les premier et deuxième faisceaux lumineux sont des faisceaux de type feu de croisement respectivement pour circulation à droite et pour circulation à gauche, l'étape consistant à optimiser la portée du faisceau lumineux global comporte les différentes opérations consistant à :
   - déterminer si la distance instantanée déterminée est supérieure à une première valeur seuil ;
   - le cas échéant, c'est-à-dire si la distance instantanée est supérieure à la première valeur seuil, activer une fonction code autoroute dans au moins un des dispositifs projecteurs du couple de dispositifs projecteurs considéré de manière à générer un troisième faisceau lumineux de type feu code autoroute adapté à un sens de circulation donné, l'autre projecteur générant un faisceau lumineux avec une coupure oblique adaptée à la circulation dans l'autre sens de circulation ;
- le procédé comporte l'étape supplémentaire consistant à abaisser, en fonction de la position latérale déterminée pour le deuxième véhicule, une ligne de coupure du faisceau lumineux produit par le dispositif projecteur dont ledit mécanisme d'actionnement dans les virages est arrivé en fin de course ;
- le procédé comporte l'étape supplémentaire consistant à, en cas d'absence de détection d'un deuxième véhicule à ne pas éblouir, faire converger l'un vers l'autre le premier faisceau lumineux et le deuxième faisceau lumineux jusqu'à ce que le faisceau lumineux global ne comporte plus de portion non éblouissante, produisant ainsi un faisceau route ;
- pour au moins un des deux dispositifs projecteurs considérés, la fonction code et la fonction route sont réalisées par un même module optique.

Un autre objet de l'invention est un véhicule automobile apte à mettre en oeuvre le procédé selon l'invention avec ses caractéristiques principales précédemment précisées, et éventuellement une ou plusieurs caractéristiques complémentaires qui viennent d'être mentionnées.

L'invention et ses différentes applications seront mieux comprises à la lecture de la description qui suit et à l'examen des figures qui l'accompagnent.

Celles-ci ne sont présentées qu'à titre indicatif et nullement limitatif de l'invention.
- à la figure 1, déjà décrite, une représentation schématique de différentes coupures de faisceaux lumineux ;
- à la figure 2, également déjà décrite, un exemple de mise en oeuvre de procédé d'adaptation d'un faisceau lumineux généré par un véhicule en fonction de la distance à laquelle se situe un véhicule adverse ;
- à la figure 3, également déjà décrite, une représentation schématique d'un découpage d'un faisceau lumineux global en différentes portions pour illustrer une possibilité d'amélioration des faisceaux lumineux globaux produits ;
- aux figures 4-A, 4-B et 4-C, différentes représentations schématiques d'une scène de route illustrant un exemple de mise en oeuvre du procédé selon l'invention.

Les éléments apparaissant sur différentes figures conservent, sauf précision contraire, les mêmes références.

Pour permettre à un premier véhicule, mettant en oeuvre le procédé selon l'invention, d'optimiser l'éclairage d'une route sans éblouir d'éventuels autres véhicules, il est nécessaire, dans un premier temps, de déterminer la présence de ces autres véhicules, et de déterminer une position latérale instantanée, c'est-à-dire de déterminer dans quelle portion du faisceau lumineux global produit se trouvent les autres véhicules.

A cet effet, on prévoit la mise en oeuvre de moyens d'évaluation de position latérale connus, mettant en oeuvre par exemple une ou plusieurs caméras embarquées dans le véhicule, associées à des moyens logiciels de traitement d'images.

Avantageusement, on prévoit également, dans certains exemples de mise en oeuvre du procédé selon l'invention, de déterminer une distance entre le véhicule selon l'invention et les autres véhicules, croisés ou suivis, et notamment le véhicule croisé ou suivi le plus proche ; les moyens intervenant peuvent par exemple être constitués par:
- une caméra associée à des moyens de traitement d'images permettant notamment de repérer les dispositifs projecteurs des autres véhicules ; l'évaluation de l'écart entre les dispositifs projecteurs d'un même véhicule permet la détermination de la distance entre le véhicule considéré et le premier véhicule, ladite distance variant proportionnellement audit écart ; ou
- un lidar ; ou
- un radar ; ou
- un système stéréoscopique basé sur l'utilisation de deux caméras.

Afin d'augmenter la précision dans la mesure de la distance entre le premier véhicule et les autres véhicules, plusieurs de ces moyens peuvent être utilisés conjointement.

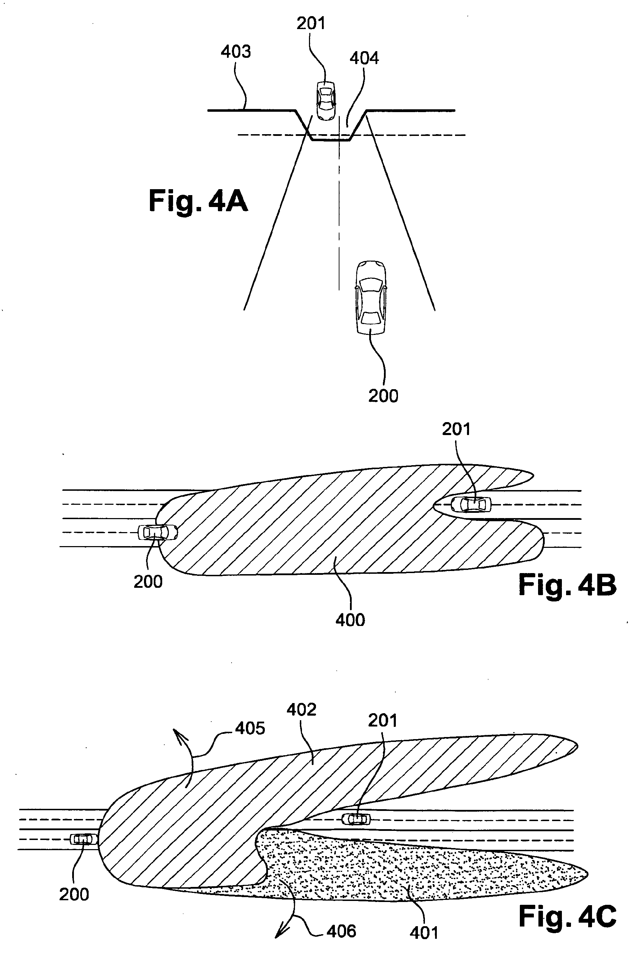

La figure 4-A montre une première représentation d'une scène de route, dans laquelle le premier véhicule 200 est sur le point de croiser un deuxième véhicule 201 qui vient d'être détecté par les moyens embarqués par le véhicule. La figure 4-B montre une deuxième vue de cette même scène de route. Dès que la position latérale du véhicule 201 a été déterminée, on procède, dans cet exemple de mise en oeuvre du procédé selon l'invention, et en supposant que le premier véhicule 200 circulait en feux route, à une adaptation d'un faisceau lumineux global 400 produit, le faisceau lumineux global résultant de la superposition d'un premier faisceau lumineux, produit par le dispositif projecteur droit - en considérant la position d'un conducteur du véhicule - et d'un deuxième faisceau lumineux, produit par le dispositif projecteur gauche.

L'adaptation consiste ici à commuter, par exemple en faisant intervenir différents caches permettant de produire des lignes de coupure appropriées, la fonction route pour réaliser une fonction d'éclairage différente. Dans l'exemple représenté, la fonction d'éclairage différente produit le faisceau lumineux global 400 qui consiste en la superposition, visible essentiellement à la figure 4-C, d'un premier faisceau lumineux 401, produit par le dispositif projecteur droit, et d'un deuxième faisceau lumineux 402, produit par le dispositif projecteur gauche, correspondant , dans cet exemple, respectivement à une fonction code associée à une circulation à droite et à une fonction code associée à une circulation à gauche. Une telle superposition permet d'obtenir une ligne de coupure 403 qui présente la particularité de présenter un décrochement 404. Le décrochement 404 correspond à une zone de la route dans laquelle le deuxième véhicule 201 peut évoluer sans que son conducteur soit ébloui, alors même que le faisceau lumineux global éclaire la route de part et d'autre du deuxième véhicule 201. Le décrochement 404 correspond à l'aboutissement, à l'extrémité, d'une portion non éblouissante du faisceau lumineux global 400.

Dans l'invention, afin de faire correspondre le décrochement 404 avec la position du deuxième véhicule 201, on exploite l'information de position latérale du deuxième véhicule 201 pour provoquer un mouvement de rotation 405 ou 406 autour d'un axe vertical d'au moins un des deux dispositifs projecteurs ; à cet effet, on propose notamment d'utiliser les mécanismes intervenant dans les fonctions DBL. Un tel mouvement de rotation permet l'écartement progressif relatif du premier faisceau 401 et du deuxième faisceau 402, laissant ainsi pénétrer, comme représenté de façon plus marquée à la figure 4-C, le deuxième véhicule 402 dans une zone non éblouissante ; la zone non éblouissante est cependant éclairée de part et d'autre par le faisceau global 400.

Lorsque la fonction DBL arrive à son maximum d'amplitude, c'est-à-dire lorsque la partie tournante du dispositif projecteur arrive en butée mécanique, et qu'il est nécessaire de continuer à écarter le premier faisceau 401 et le deuxième faisceau 402 pour que le conducteur du véhicule 202 ne soit pas ébloui, on procède à un abaissement vertical de la ligne de coupure 403, au moins du côté de la route où se trouve le véhicule 202.

Avantageusement, comme représenté aux figures 4-A à 4-C, on exploite une information de distance entre le premier véhicule 200 et le deuxième véhicule 201 pour optimiser la portée du faisceau lumineux global 400. Différentes solutions sont proposées pour optimiser une telle portée ; on peut mentionner par exemple :
- une utilisation du système connu de correction d'assiette ;
- une utilisation d'au moins un module optique de type trixénon ; en fonction de la distance séparant les deux véhicules, le faisceau de type code autoroute, précédemment décrit, est utilisé : typiquement, tant que cette distance est supérieure à environ 150 mètres, un tel faisceau est utilisé, permettant ainsi une transition moins brutale antre le faisceau de type route et le faisceau de type code ;
- une intervention d'une fonction connue sous l'appellation faisceau progressif (progressive beam en langue anglaise), dans laquelle un cache évolue verticalement devant une source lumineuse dans au moins un des deux dispositifs projecteurs, permettant ainsi de régler une portée d'éclairage en faisant évoluer verticalement le positionnement de la ligne de coupure 403.

Dans le cas où une pluralité de véhicules sont détectés, on prend essentiellement en considération la position des deux véhicules les plus excentrés sur la route, c'est-à-dire les véhicules présentant le plus grand écartement visible depuis le premier véhicule 201. On procède alors à un écartement du premier faisceau 401 et du deuxième faisceau 402 suffisant pour que les deux véhicules considérés soient dans le décrochement 404, ou dans le prolongement - en considérant le sens de circulation du véhicule 200 sur la route - du décrochement 404. L'information de distance exploitée, pour adapter avantageusement la portée du faisceau lumineux global 400, est l'information de distance donnant l'éloignement du véhicule croisé ou suivi le plus proche du premier véhicule 200.

Dans un mode de mise en oeuvre particulier du procédé selon l'invention, on propose, pour réaliser la fonction route, de faire converger l'un vers l'autre le premier faisceau lumineux 401 et le deuxième faisceau lumineux 402, les amenant à se croiser, jusqu'à ce qu'aucune portion du faisceau global résultant ne présente de zone non éblouissante. Une telle mise en oeuvre, observée quand aucun véhicule susceptible d'être ébloui n'a été détecté, permet l'obtention d'un faisceau de type route, sans requérir l'intervention d'un cache pour assurer la transition route-code ; seuls les mécanismes associés aux fonctions DBL sont utilisés, éventuellement complétés par des moyens de déplacement vertical du faisceau lumineux global.

Le procédé selon l'invention, en proposant l'utilisation par exemple de la fonction code associée à la circulation à droite et de la fonction code associée à la circulation à gauche, et la superposition des faisceaux lumineux correspondant, permet de s'affranchir de l'utilisation d'une pluralité de diodes. Grâce au procédé selon l'invention, on peut utiliser des dispositifs projecteurs intégrant des modules optiques ne comportant qu'une unique source lumineuse tout en rendant possible une adaptation automatique latérale du faisceau lumineux global produit par les modules optiques considérés.

## Revendications

1. Procédé d'adaptation automatique d'un faisceau lumineux global (400) produit par un couple de dispositifs projecteurs d'un premier véhicule (201) automobile circulant sur une route, ledit couple étant composé d'un dispositif projecteur gauche et d'un dispositif projecteur droit, ledit couple de dispositifs projecteurs étant apte à réaliser au moins :
- une fonction code en produisant un faisceau lumineux de type code ;
- une fonction route en produisant un faisceau lumineux de type route ;
**caractérisé en ce que** le procédé comporte les différentes étapes consistant à :
- détecter la présence d'au moins un deuxième véhicule (201), suivi ou croisé, à ne pas éblouir ;
- le cas échéant, déterminer une position latérale instantanée du deuxième véhicule sur la route ;
- superposer un premier faisceau lumineux (401), produit par un des dispositifs projecteurs du couple de dispositifs projecteurs et présentant une coupure oblique associée à une circulation à droite, et un deuxième faisceau lumineux (402), produit par l'autre dispositif projecteur du couple de dispositifs projecteurs et présentant une coupure oblique associée à une circulation à gauche, pour former le faisceau lumineux global (400) ;
- orienter (405 ; 406) ledit premier faisceau lumineux (401) et/ou ledit deuxième faisceau lumineux (402) en fonction de la position latérale instantanée déterminée du deuxième véhicule (201), de manière à émettre une portion non éblouissante du faisceau lumineux global (400) dans une direction visant la position latérale du deuxième véhicule.

2. Procédé selon la revendication précédente **caractérisé en ce que** l'étape de détection est effectuée lorsque la fonction route desdits projecteurs est activée.

3. Procédé selon la revendication 1 ou 2 **caractérisé en ce qu'**il comporte les différentes étapes supplémentaires consistant à :
- détecter la présence d'au moins un troisième véhicule, le deuxième véhicule et le troisième véhicule présentant un écartement maximal parmi des écartements existant entre les différents véhicules de la pluralité de véhicules détectés ;
- orienter (405 ;406) ledit premier faisceau lumineux (401) et/ou ledit deuxième faisceau lumineux (402) en fonction de la position latérale instantanée déterminée du deuxième véhicule et du troisième véhicule, de manière à émettre une portion non éblouissante du faisceau lumineux global (400) dont la taille correspond au moins au dit écartement maximal, dans une direction permettant le positionnement de ladite portion non éblouissante sur une zone correspondant à l'écartement maximal présenté par le deuxième véhicule et le troisième véhicule.

4. Procédé selon l'une au moins des revendications précédentes, dans lequel le dispositif projecteur droit et le dispositif projecteur gauche comportent un mécanisme d'actionnement dans les virages des faisceaux lumineux permettant la réalisation d'une fonction code virage, le procédé étant **caractérisé en ce que** l'étape consistant à orienter (405 ; 406) ledit premier faisceau lumineux (401) et/ou ledit deuxième faisceau lumineux (402) en fonction de la position latérale déterminée pour le deuxième véhicule (201) est réalisée par l'utilisation du même mécanisme d'actionnement dans les virages dans au moins un des dispositifs projecteurs considérés.

5. Procédé selon l'une au moins des revendications précédentes **caractérisé en ce que** le faisceau lumineux présentant une coupure oblique associée à une circulation à droite et le faisceau lumineux présentant une coupure oblique associée à une circulation à gauche sont produits respectivement par un premier module optique et par un deuxième module optique, appartenant respectivement au dispositif projecteur droit et au dispositif projecteur gauche, le premier module optique et le deuxième module optique comportant chacun une unique source lumineuse, notamment de type lampe à Xénon.

6. Procédé selon l'une au moins des revendications précédentes **caractérisé en ce que** le faisceau lumineux présentant une coupure oblique associée à une circulation à gauche est produit par le dispositif projecteur gauche et **en ce que** le faisceau lumineux présentant une coupure oblique associée à une circulation à droite est produit par le dispositif projecteur droit.

7. Procédé selon l'une au moins des revendications précédentes **caractérisé en ce qu'**il comporte les différentes étapes supplémentaires consistant à, suite à la détection de la présence d'au moins un deuxième véhicule (201), suivi ou croisé, à ne pas éblouir :
- déterminer une distance instantanée entre le premier véhicule et le deuxième véhicule ;
- adopter une portée du faisceau lumineux global (400) optimisée en fonction de la distance déterminée.

8. Procédé selon la revendication précédente **caractérisé en ce que** l'étape consistant à optimiser la portée du faisceau lumineux global (400) comporte l'opération consistant à régler la hauteur d'une ligne de coupure (403) du faisceau lumineux global (400) au moyen d'un système de correction d'assiette.

9. Procédé selon l'une au moins des revendications 7 ou 8 **caractérisé en ce que** l'étape consistant à optimiser la portée du faisceau lumineux global (400) comporte l'opération consistant à régler la hauteur d'une ligne de coupure (403) du faisceau lumineux global au moyen d'un cache évoluant selon un mouvement sensiblement vertical dans au moins un des dispositifs projecteurs du couple de dispositifs projecteurs.

10. Procédé selon la revendication 7 **caractérisé en ce que** les premier et deuxième faisceaux lumineux sont des faisceaux de type feu de croisement respectivement pour circulation à droite et pour circulation à gauche, l'étape consistant à optimiser la portée du faisceau lumineux global (400) comporte les différentes opérations consistant à :
- déterminer si la distance instantanée déterminée est supérieure à une première valeur seuil ;
- le cas échéant, activer une fonction code autoroute d'un des dispositifs projecteurs du couple de dispositifs projecteurs considéré, de manière à générer un troisième faisceau lumineux de type feu code autoroute adapté à un sens de circulation donné, l'autre dispositif projecteur générant un faisceau lumineux avec une coupure oblique adaptée à la circulation dans l'autre sens de circulation.

11. Procédé selon l'une au moins des revendications précédentes et selon la revendication 4 **caractérisé en ce qu'**il comporte l'étape supplémentaire consistant à abaisser, en fonction de la position latérale déterminée pour le deuxième véhicule (201), une ligne de coupure du faisceau lumineux produit par le dispositif projecteur dont ledit mécanisme d'actionnement dans les virages est arrivé en fin de course.

12. Procédé selon l'une au moins des revendications précédentes **caractérisé en ce que** il comporte l'étape supplémentaire consistant à, en cas d'absence de détection d'un deuxième véhicule à ne pas éblouir, faire converger l'un vers l'autre le premier faisceau lumineux et le deuxième faisceau lumineux jusqu'à ce que le faisceau lumineux global ne comporte plus de portion non éblouissante, produisant ainsi un faisceau route.

13. Procédé selon l'une au moins des revendications précédentes **caractérisé en ce que**, pour au moins un des deux dispositifs projecteurs considérés, la fonction code et la fonction route sont réalisées par un même module optique.

14. Véhicule automobile (200) adapté pour mettre en oeuvre le procédé selon l'une au moins des revendications précédentes.

## Claims

1. Method for automatic adaptation of a global light beam (400) produced by a pair of headlight devices of a first motor vehicle (201) travelling on a road, the said pair consisting of a left headlight device and a right headlight device, the said pair of headlights being able to provide at least:
- a low-beam function by producing a light beam of the low-beam type;
- a high-beam function by producing a light beam of the high-beam type; **characterised in that** the method comprises the different steps consisting of:
- detecting the presence of at least one second vehicle (201), which is being followed or passed, and is not to be dazzled;
- if applicable, determining an instantaneous lateral position of the second vehicle on the road;
- superimposing a first light beam (401), produced by one of the headlight devices of the pair of headlight devices, and having an oblique cut-off which is associated with travel on the right, and a second light beam (402), which is produced by the other headlight device of the pair of headlight devices, and has an oblique cut-off which is associated with travel on the left, in order to form the global light beam (400);
- orienting (405; 406) the said first light beam (401) and/or the said second light beam (402) according to the instantaneous lateral position determined of the second vehicle (201), such as to emit a non-dazzling portion of the global light beam (400) in a direction aimed at the lateral position of the second vehicle.

2. Method according to the preceding claim, **characterised in that** the step of detection is carried out when the high-beam function of the said headlights is activated.

3. Method according to claim 1 or claim 2, **characterised in that** it comprises the different additional steps consisting of:
- detecting the presence of at least a third vehicle, the second vehicle and the third vehicle having a maximum distance from amongst the distances which exist between the different vehicles of the plurality of vehicles detected;
- orienting (405; 406) the said first light beam (401) and/or the said second light beam (402) according to the instantaneous lateral position determined of the second vehicle and of the third vehicle, such as to emit a non-dazzling portion of the global light beam (400), the size of which corresponds to at least the said maximum distance, in a direction which permits the positioning of the said non-dazzling portion over an area corresponding to the maximum distance presented by the second vehicle and the third vehicle.

4. Method according to at least one of the preceding claims, wherein the right headlight device and the left headlight device comprise a mechanism for actuation on bends of the light beams, thus permitting the implementation of a bending low-beam function, the method being **characterised in that** the step consisting of orienting (405; 406) the said first light beam (401) and/or the said second light beam (402) according to the lateral position determined for the second vehicle (201) is implemented by the use of the same mechanism for actuation on bends in at least one of the headlight devices concerned.

5. Method according to at least one of the preceding claims, **characterised in that** the light beam which has an oblique cut-off associated with travel on the right, and the light beam which has an oblique cut-off associated with travel on the left, are produced respectively by a first optical module and by a second optical module, which belong respectively to the right headlight device and to the left headlight device, the first optical module and the second optical module each comprising a single source of light, in particular of the Xenon lamp type.

6. Method according to at least one of the preceding claims, **characterised in that** the light beam which has an oblique cut-off associated with travel on the left is produced by the left headlight device, and **in that** the light beam which has an oblique cut-off associated with travel on the right is produced by the right headlight device.

7. Method according to at least one of the preceding claims, **characterised in that** it comprises the different additional steps consisting, further to the detection of the presence of at least a second vehicle (201) which is being followed or passed, and is not to be dazzled, of:
- determining an instantaneous distance between the first vehicle and the second vehicle; and
- adopting a range of the global light beam (400) which is optimised in accordance with the distance determined.

8. Method according to the preceding claim, **characterised in that** the step consisting of optimising the range of the global light beam (400) comprises the operation consisting of regulating the height of a cut-off line (403) of the global light beam (400) by means of a position correction system.

9. Method according to at least one of claims 7 or 8, **characterised in that** the step consisting of optimising the range of the global light beam (400) comprises the operation consisting of regulating the height of a cut-off line (403) of the global light beam by means of a shield which develops according to a substantially vertical movement in at least one of the headlight devices of the pair of headlight devices.

10. Method according to claim 7, **characterised in that** the first and second light beams are beams of the low-beam type, respectively for travel on the right and for travel on the left, and the step consisting of optimising the range of the global light beam (400) comprises the different operations consisting of:
- determining whether the instantaneous distance determined is greater than a first threshold value; and
- if applicable, activating a motorway low-beam function of one of the headlight devices of the pair of headlight devices concerned, such as to generate a third light beam of the motorway low-beam type, which is designed for a given direction of travel, with the other headlight device generating a light beam with an oblique cut-off which is designed for travel in the other direction of travel.

11. Method according to at least one of the preceding claims, and according to claim 4, **characterised in that** it comprises the additional step consisting of lowering, according to the lateral position determined for the second vehicle (201), a cut-off line of the light beam produced by the headlight device, the said mechanism of which for actuation on bends has reached its end-of-travel.

12. Method according to at least one of the preceding claims, **characterised in that** it comprises the additional step consisting of, in the absence detection of a second vehicle not to be dazzled, making the first light beam and the second light beam converge towards one another, until the global light beam no longer comprises a portion which is non-dazzling, thus producing a high beam.

13. Method according to at least one of the preceding claims, **characterised in that**, for at least one of the two headlight devices concerned, the low-beam function and the high-beam function are provided by a single optical module.

14. Motor vehicle (200) which is designed to implement the method according to at least one of the preceding claims.

## Patentansprüche

1. Verfahren zum automatischen Anpassen eines Gesamtlichtbündels (400), das von einem Paar Scheinwerfervorrichtungen eines ersten, eine Straße befahrenden Kraftfahrzeugs (201) erzeugt wird, wobei das Paar von einer linken Scheinwerfervorrichtung und einer rechen Scheinwerfervorrichtung gebildet ist, wobei das Scheinwerfervorrichtungspaar wenigstens zu erzeugen vermag:
- ein Abblendlicht durch Erzeugen eines Lichtbündels vom Typ Abblendlicht;
- ein Fernlicht durch Erzeugen eines Lichtbündels vom Typ Fernlicht;
**dadurch gekennzeichnet, dass** das Verfahren die folgenden verschiedenen Schritte umfasst:
- Ermitteln der Existenz wenigstens eines zweiten nicht zu blendenden, vorausfahrenden oder entgegenkommenden Fahrzeugs (201);
- gegebenenfalls Bestimmen eines momentanen lateralen Ortes des zweiten Fahrzeugs auf der Straße;
- Überlagern eines ersten Lichtbündels (401), das von einer der Scheinwerfervorrichtungen des Scheinwerfervorrichtungspaars erzeugt wird und eine dem Rechtsverkehr zugeordnete schräge Hell-Dunkel-Grenze aufweist, und eines zweiten Lichtbündels (402), das von der anderen Scheinwerfervorrichtung des Scheinwerfervorrichtungspaars erzeugt wird und eine dem Linksverkehr zugeordnete schräge Hell-Dunkel-Grenze aufweist, um das Gesamtlichtbündel (400) zu bilden,
- Ausrichten (405; 406) des ersten Lichtbündels (401) und/oder des zweiten Lichtbündels (402) in Abhängigkeit des bestimmten momentanen lateralen Ortes des zweiten Fahrzeugs (201), so dass ein blendfreier Teil des Gesamtlichtbündels (400) in einer Richtung hin zum lateralen Ort des zweiten Fahrzeugs abgegeben wird.

2. Verfahren nach dem vorhergehenden Anspruch,
**dadurch gekennzeichnet, dass** der Ermittlungsschritt erfolgt, wenn das Fernlicht der Scheinwerfer eingeschaltet ist.

3. Verfahren nach Anspruch 1 oder 2,
**dadurch gekennzeichnet, dass** es die folgenden verschiedenen zusätzlichen Schritte umfasst:
- Ermitteln der Existenz wenigstens eines dritten Fahrzeugs, wobei das zweite Fahrzeug und das dritte Fahrzeug einen Höchstabstand unter den Abständen aufweisen, die zwischen den verschiedenen Fahrzeugen der Vielzahl ermittelter Fahrzeuge bestehen;
- Ausrichten (405; 406) des ersten Lichtbündels (401) und/oder des zweiten Lichtbündels (402) in Abhängigkeit des bestimmten momentanen lateralen Ortes des zweiten Fahrzeugs und des dritten Fahrzeugs, so dass ein blendfreier Teil des Gesamtlichtbündels (400), dessen Größe wenigstens dem Höchstabstand entspricht, in eine Richtung abgegeben wird, die das Positionieren des blendfreien Teils in einem Bereich erlaubt, der dem Höchstabstand des zweiten Fahrzeugs und des dritten Fahrzeugs entspricht.

4. Verfahren nach wenigstens einem der vorhergehenden Ansprüche,
bei dem die rechte Scheinwerfervorrichtung und die linke Scheinwerfervorrichtung einen Kurvenstellmechanismus für die Lichtbündel in Kurven umfasst, wodurch ein Kurvenlicht erzeugt wird, wobei das Verfahren **dadurch gekennzeichnet ist, dass** der Schritt zum Ausrichten (405; 406) des ersten Lichtbündels (401) und/oder des zweiten Lichtbündels (402) in Abhängigkeit des für das zweite Fahrzeug (201) bestimmten lateralen Ortes durch Verwendung ein und desselben Kurvenstellmechanismus in wenigstens einer der betreffenden Scheinwerfervorrichtungen realisiert wird.

5. Verfahren nach wenigstens einem der vorhergehenden Ansprüche,
**dadurch gekennzeichnet, dass** das Lichtbündel mit einer dem Rechtsverkehr zugeordneten schrägen Hell-Dunkel-Grenze und das Lichtbündel mit einer dem Linksverkehr zugeordneten schrägen Hell-Dunkel-Grenze von einem ersten Optikmodul bzw. einem zweiten Optikmodul erzeugt werden, das der rechten Scheinwerfervorrichtung bzw. der linken Scheinwerfervorrichtung zugehörig ist, wobei das erste Optikmodul und das zweite Optikmodul jeweils eine einzige Lichtquelle, insbesondere vom Typ Xenon-Lampe, umfassen.

6. Verfahren nach wenigstens einem der vorhergehenden Ansprüche,
**dadurch gekennzeichnet, dass** das Lichtbündel mit einer dem Linksverkehr zugeordneten schrägen Hell-Dunkel-Grenze von der linken Scheinwerfervorrichtung erzeugt wird und dass das Lichtbündel mit einer dem Rechtsverkehr zugeordneten schrägen Hell-Dunkel-Grenze von der rechten Scheinwerfervorrichtung erzeugt wird.

7. Verfahren nach wenigstens einem der vorhergehenden Ansprüche,
**dadurch gekennzeichnet, dass** es nach dem Ermitteln der Existenz wenigstens eines zweiten nicht zu blendenden, vorausfahrenden oder entgegenkommenden Fahrzeugs (201) die folgenden verschiedenen zusätzlichen Schritte umfasst:
- Bestimmen eines momentanen Abstands zwischen dem ersten Fahrzeug und dem zweiten Fahrzeug;
- Übernehmen einer optimierten Reichweite des Gesamtlichtbündels (400) in Abhängigkeit des bestimmten Abstands.

8. Verfahren nach dem vorhergehenden Anspruch,
**dadurch gekennzeichnet, dass** der Schritt zum Optimieren der Reichweite des Gesamtlichtbündels (400) den Vorgang des Einstellens der Höhe einer Hell-Dunkel-Begrenzungslinie (403) des Gesamtlichtbündels (400) mittels eines Systems zur Niveauregelung umfasst.

9. Verfahren nach wenigstens einem der Ansprüche 7 oder 8,
**dadurch gekennzeichnet, dass** der Schritt zum Optimieren der Reichweite des Gesamtlichtbündels (400) den Vorgang des Einstellens der Höhe einer Hell-Dunkel-Begrenzungslinie (403) des Gesamtlichtbündels mittels einer Blende umfasst, die sich mit einer im Wesentlichen vertikalen Bewegung in wenigstens einer der Scheinwerfervorrichtungen des Scheinwerfervorrichtungspaars verlagert.

10. Verfahren nach Anspruch 7,
**dadurch gekennzeichnet, dass** das erste und das zweite Lichtbündel Lichtbündel vom Typ Abblendlicht für Rechtsverkehr bzw. Linksverkehr sind, wobei der Schritt zum Optimieren der Reichweite des Gesamtlichtbündels (400) die folgenden verschiedenen Schritte umfasst:
- Ermitteln, ob der bestimmte momentane Abstand über einem ersten Schwellenwert liegt;
- gegebenenfalls Einschalten eines Autobahnlichts einer der Scheinwerfervorrichtungen des betreffenden Scheinwerfervorrichtungspaars, so dass ein drittes, einer gegebenen Fahrtrichtung angepasstes Lichtbündel vom Typ Autobahnlicht erzeugt wird, wobei die andere Scheinwerfervorrichtung ein Lichtbündel mit einer für Verkehr mit anderer Fahrtrichtung angepassten schrägen Hell-Dunkel-Grenze erzeugt.

11. Verfahren nach wenigstens einem der vorhergehenden Ansprüche und nach Anspruch 4,
**dadurch gekennzeichnet, dass** es den zusätzlichen Schritt des Absenkens einer Hell-Dunkel-Begrenzungslinie des Lichtbündels, das von der Scheinwerfervorrichtung erzeugt wird, deren Kurvenstellmechanismus die Endstellung erreicht hat, in Abhängigkeit des bestimmten lateralen Ortes des zweiten Fahrzeugs (201) umfasst.

12. Verfahren nach wenigstens einem der vorhergehenden Ansprüche,
**dadurch gekennzeichnet, dass** es bei Nichtermittlung eines zweiten nicht zu blendenden Fahrzeugs den zusätzlichen Schritt des Zusammenführens des ersten Lichtbündels und des zweiten Lichtbündels umfasst, bis das Gesamtlichtbündel keinen blendfreien Teil mehr enthält, wodurch ein Fernlicht erzeugt wird.

13. Verfahren nach wenigstens einem der vorhergehenden Ansprüche,
**dadurch gekennzeichnet, dass** für wenigstens eine der beiden betreffenden Scheinwerfervorrichtungen das Abblendlicht und das Fernlicht durch ein und dasselbe Optikmodul erzeugt werden.

14. Kraftfahrzeug (200),
das das Verfahren nach wenigstens einem der vorhergehenden Ansprüche durchzuführen vermag.
